# EUROPÄISCHE PATENTANMELDUNG

(11) **EP 0 641 128 A1**
(43) Veröffentlichungstag der Anmeldung: **01.03.1995**
(21) Anmeldenummer: 94112096.6
(22) Anmeldetag: 03.08.1994
(51) Int. Cl.: H04N 7/14

(54) **Kommunikationssystem für die Übertragung von Bild- und Tonsignalen**

(30) Priorität: 30.08.1993 DE 4329173
(71) Anmelder: Alcatel SEL Aktiengesellschaft, D-70435 Stuttgart (DE)
(72) Erfinder: Köhler, Günter, D-73230 Kirchheim (DE); Reh, Klaus, D-73095 Albershausen (DE); Stannard, Richard, D-70435 Stuttgart (DE)
(74) Vertreter: Schätzle, Albin, Dipl.-Phys.

(57) **Zusammenfassung**

Es ist eine aufwandsarme und flexible Benutzung eines Kommunikationssystems (CS) für die Übertragung von Bild- und Tonsignalen zu ermöglichen.

Es werden dazu mehrere Anschlußeinheiten (TAE1, ..., TAE8, QAE, KAE, CAE) mittels richtungsunabhängiger Koppelmittel (AD1, ..., AD8) sowohl zum Einkoppeln als auch zum Auskoppeln von Bild- und Tonsignalen an ein Breitbandkabel (K) angeschlossen. Auf dem Breitbandkabel (K) kann somit eine bidirektionale Bild- und Tonsignalübertragung stattfinden.

## Beschreibung

Die vorliegende Erfindung betrifft ein Kommunikationssystem gemäß dem Oberbegriff des Patentanspruchs 1 und eine Anschlußeinheit gemäß dem Oberbegriff des Patentanspruchs 7.

Ein solches Kommunikationssystem ist aus der Europäischen Patentanmeldung EP 0 488 289 A2 bekannt. In dem dort beschriebenen Kommunikationssystem ist an ein Übertragungskabel eine Vielzahl von Teilnehmeranschlußeinheiten angeschlossen. Diese Teilnehmeranschlußeinheiten enthalten ein Modulationsmittel zur Modulation eines Bild- und eines Tonsignals auf ein Trägersignal, dessen Frequenz variabel ist.

Desweiteren enthalten die Teilnehmeranschlußeinheiten ein Demodulationsmittel zur Demodulation eines anderen Bild- und Tonsignals von einem anderen Trägersignal, dessen Frequenz ebenfalls variabel ist. Auf dem Übertragungskabel findet eine unidirektionale Übertragung der Bild- und Tonsignale statt. Jede Teilnehmeranschlußeinheit ist mittels zweier richtungsabhängiger Koppelmittel an das Übertragungskabel angeschlossen. Mit dem ersten Koppelmittel werden die zu sendenden Bild- und Tonsignale in das Übertragungskabel eingekoppelt und mit dem zweiten Koppelmittel werden die zu empfangenden Bild- und Tonsignale aus dem Übertragungskabel ausgekoppelt.

Es ist die Aufgabe der vorliegenden Erfindung, eine aufwandsarme und flexible Benutzung eines Kommunikationssystems für die Übertragung von Bild- und Tonsignalen zu ermöglichen. Erfindungsgemäß ist diese Aufgabe durch die technische Lehre des Patentanspruchs 1 oder des Patentanspruchs 7 gelöst.

Vorteilhafterweise kann bei dem erfindungsgemäßen Kommunikationssystem die Signalisierung zum Auf- und Abbau von Verbindungen zwischen den an das Breitbandkabel angeschlossenen Anschlußeinheiten ebenfalls über das Breitbandkabel durchgeführt werden.

Ein weiterer Vorteil des erfindungsgemäßen Kommunikationssystems ist die Verbesserung der Abhörsicherheit.

Eine besonders vorteilhafte Ausgestaltung des erfindungsgemäßen Kommunikationssystems erhält man bei Verwendung eines Koaxialkabels als Breitbandkabel.

Weitere vorteilhafte Ausgestaltungen der Erfindung, sind den abhängigen Patentansprüchen zu entnehmen.

Zur Verdeutlichung der vorliegenden Erfindung und ihrer Vorteile sind im folgenden Ausführungsbeispiele anhand der Figuren 1 bis 5 beschrieben. Es zeigen im einzelnen:
- Fig. 1: ein Ausführungsbeispiel eines erfindungsgemäßen Kommunikationssystems, an das eine Anzahl von verschiedenen Anschlußeinheiten angeschlossen sind,
- Fig. 2: ein Ausführungsbeispiel einer erfindungsgemäßen Teilnehmeranschlußeinheit,
- Fig. 3: ein Ausführungsbeispiel einer erfindungsgemäßen Querverbindungseinheit,
- Fig. 4: ein Ausführungsbeispiel einer erfindungsgemäßen Videokonferenzeinheit und
- Fig. 5: ein Ausführungsbeispiel einer erfindungsgemäßen Codec-Anschlußeinheit.

In den Ausführungsbeispielen werden für gleiche oder gleichwirkende Elemente durchweg gleiche Bezugszeichen verwendet.

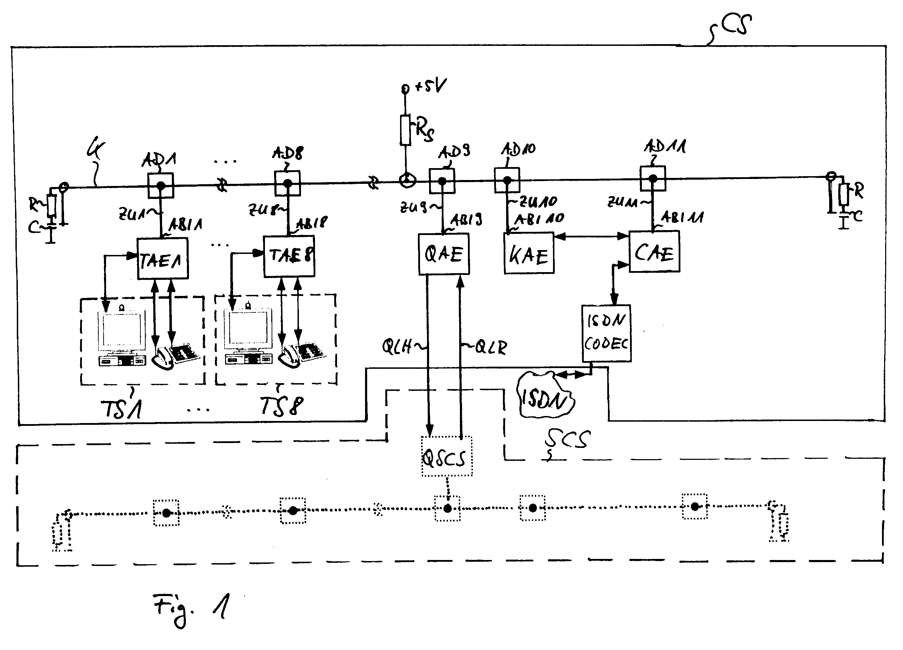

Das in der Fig. 1 abgebildete Ausführungsbeispiel zeigt ein Kommunikationssystem CS mit einem als Koaxialkabel K ausgebildeten Breitbandkabel in Bus-Konfiguration. Es ist auch möglich, statt des Koaxialkabels K ein anderes abgeschirmtes Breitbandkabel, wie z.B. das IBM Tip 1 Twisted Pair, zu verwenden. Der Außenleiter des Koaxialkabels K ist an seinen beiden Enden auf Masse gelegt. Der Innenleiter des Koaxialkabels K ist an seinen beiden Enden jeweils über einen niederohmigen Widerstand R, der beispielsweise 75 Ohm beträgt, und einen dazu in Reihe geschalteten Kondensator C gegen Masse und über einen hochohmigeren Widerstand R_{S}, der beispielsweise 1kOhm beträgt, gegen ein positives Potential + 5V geschaltet. Auf dem Innenleiter werden sowohl Bild- und Tonsignale als auch Signalisierungssignale und optional zusätzlich andere Signale, die den Signalisierungsablauf allerdings nicht stören dürfen, übertragen.

An das Koaxialkabel K ist eine Anzahl von elf richtungsunabhängigen Koppelmitteln AD1, ..., AD11 angekoppelt. Über die Koppelmittel AD1, ..., AD8 ist eine Anzahl von acht Teilnehmeranschlußeinheiten TAE1, ..., TAE8 an das Koaxialkabel K angeschlossen. An diese Teilnehmeranschlußeinheiten TAE1, ..., TAE8 ist eine Anzahl von acht Teilnehmerstationen TS1, ..., TS8 angeschlossen, die bildtelefonietauglich sind und optional eine Dokumentenkamera haben. Mittels des Koppelmittels AD9 ist eine Querverbindungseinheit QAE und mittels des Koppelmittels AD10 eine Videokonferenzeinheit KAE an das Koaxialkabel K angeschlossen. Eine Codec-Anschlußeinheit CAE ist mittels des Koppelmittels AD11 an das Koaxialkabel K angekoppelt. Die Codec-Anschlußeinheit CAE hat eine Verbindung zu einem ISDN (Integrated Services Digital Network)-Codec, der Teilnehmern des Kommunikationssystems CS einen Zugang zum öffentlichen ISDN ermöglicht und umgekehrt. Zusätzlich oder anstelle des ISDN-Codecs und der zugehörigen Codec-Anschlußeinheit CAE können auch ein oder mehrere andere Codecs, beispielsweise ein 2 Mbit/s-Codec oder ein ATM-Codec, mit ihren zugehörigen, anderen Codec-Anschlußeinheiten mittels anderer richtungsunabhängiger Koppelmittel an das Koaxialkabel K angeschlossen sein. Die Verbindungen von dem Koaxialkabel K zu den Teilnehmeranschlußeinheiten TAE1, ..., TAE8, zu der Querverbindungseinheit QAE, zu der Videokonferenzeinheit KAE und zu der Codec-Anschlußeinheit CAE jeweils über eines der richtungsunabhängigen Koppelmittel AD1, ..., AD11 sind bidirektionale Verbindungen, die jeweils mittels eines weiteren Koaxialkabels ZU1, ..., ZU11 realisiert sind. Jede Anschlußeinheit TAE1, ..., TAE8, QAE, KAE, CAE hat dazu einen Anschluß ABI1, ..., ABI11, über den sowohl zu sendende als auch zu empfangende Bild- und Tonsignale übertragen werden.

Über die Querverbindungseinheit QAE besteht die Möglichkeit, eine Verbindung zu einem Teilnehmer eines weiteren, gleichartigen Kommunikationssystems SCS aufzubauen. Dazu ist die Querverbindungseinheit QAE durch zwei weitere Koaxialkabel QLH und QLR mit einer Querverbindungseinheit QSCS des weiteren Kommunikationssystems SCS verbunden. Das Koaxialkabel QLH überträgt Bild- und Tonsignale über einen fest vorgegebenen Kanal von der Querverbindungseinheit QAE zu der Querverbindungseinheit QSCS. Das Koaxialkabel QLR überträgt Bild- und Tonsignale über einen anderen, fest vorgegebenen Kanal in der umgekehrten Richtung. Die Signalisierungssignale werden wie beim Koaxialkabel K auf den Innenleitern der Koaxialkabel QLH und QLR in die entsprechenden Richtungen übertragen.

Die Videokonferenzeinheit KAE besitzt eine Verbindung zu der Codec-Anschlußeinheit CAE. Im vorliegenden Ausführungsbeispiel kann eine Videokonferenz mit drei Teilnehmern durchgeführt werden. Einer dieser drei Teilnehmer kann dabei Teilnehmer des öffentlichen ISDN sein. Generell ist es auch möglich, mehr als drei Teilnehmer zu der Videokonferenz zuzulassen, allerdings erhöht sich dann der Aufwand zur Realisierung, insbesondere in der Videokonferenzeinheit KAE.

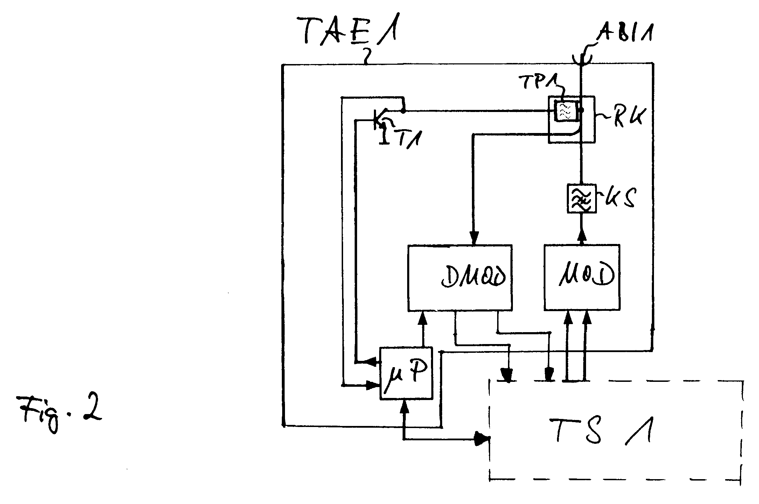

Fig. 2 zeigt das Ausführungsbeispiel des Aufbaus der Teilnehmeranschlußeinheit TAE1 aus Fig. 1. Die Teilnehmeranschlußeinheiten TAE2, ..., TAE8 aus Fig. 1 sind entsprechend aufgebaut. Über einen richtungsabhängigen Richtkoppler RK, der über den Anschluß ABI1 und das weitere Koaxialkabel ZU1 mit dem richtungsunabhängigen, in die Fig. 2 nicht eingezeichneten Koppelmittel AD1 aus Fig. 1 verbunden ist, werden die auf dem in die Fig. 2 nicht eingezeichneten Koaxialkabel K befindlichen Bild- und Tonsignale zu einem Demodulationsmittel DMOD weitergeleitet und die Signalisierungssignale über einen Tiefpaß TP1 zu einem Steuermittel µP. Die Signalisierungssignale enthalten die Adresse des angerufenen Teilnehmers und ebenfalls den Kanal, auf dem die Bild- und Tonsignale des rufenden Teilnehmers über das Koaxialkabel K übertragen werden. Anhand der Adresse erkennt das Steuermittel µP das für die Teilnehmeranschlußeinheit TAE1 bestimmte Signalisierungssignal und stimmt das Demodulationsmittel DMOD auf den angegebenen Kanal ab, auf dem der rufende Teilnehmer sendet. Das Demodulationsmittel DMOD empfängt die auf einen Träger modulierten Bild- und Tonsignale und demoduliert sie. Die demodulierten Bild- und Tonsignale werden anschließend zu der zugehörigen Teilnehmerstation TS1 weitergeleitet. Die Verbindung wird daher dadurch hergestellt, daß das Demodulationsmittel DMOD auf den Kanal des rufenden Teilnehmers abgestimmt wird. Es können nicht nur Punkt-zu-Punkt Verbindungen, sondern auch Punkt-zu-Multipunkt Verbindungen aufgebaut werden (z.B. für Verteildienste).

Ein Modulationsmittel MOD moduliert die von der Teilnehmerstation TS1 kommenden Bild- und Tonsignale gemäß der CCIR-Fernsehnorm auf einen hochfrequenten Träger einer fest vorgebbaren Frequenz. Die Bild- und Tonsignale der Teilnehmerstation TS1 werden daher immer über einen dieser Teilnehmerstation TS1 fest zugeordneten Kanal übertragen. Bild- und Tonsignal haben dabei einen genormten Bild-Ton-Signalabstand von 5,5 MHz. Als Demodulationsmittel DMOD und Modulationsmittel MOD können handelsübliche TV-Komponenten verwendet werden. Die modulierten Bild- und Tonsignale werden dann über eine Kanalsperre KS und den Richtkoppler RK zur Übertragung in das Koaxialkabel K eingekoppelt. Die Kanalsperre KS stellt einen Bandpaß dar, der auf das Modulationsmittel MOD abgestimmt ist und nur die innerhalb der eigenen Kanalbandbreite liegenden Frequenzen passieren läßt. Die Kanalsperre KS bewirkt eine Dämpfung des Ausgangssignalpegels des Modulationsmittels MOD. Dies ist notwendig, da ansonsten der Eingangssignalpegel an einem der Demodulationsmittel zu groß sein könnte.

Wie bereits oben beschrieben, wird der Verbindungsauf- und -abbau mittels der Signalisierungssignale durchgeführt. Beim Senden der Signalisierungssignale empfängt das Steuermittel µP von der Teilnehmerstation TS1 Steuerbefehle. An einem Signalisierungsausgang des Steuermittels µP ist die Basis eines Transistors T1, dessen Emitter auf Masse gelegt ist, angeschlossen. Der Kollektor des Transistors T1 ist über den Tiefpaß TP1 und den Richtkoppler RK mit dem Innenleiter des Koaxialkabels K verbunden. Das Signalisierungssignal hat eine Frequenz von etwa 5 kHz. Der Tiefpaß TP1 ist so dimensioniert, daß er Signale, die hochfrequenter sind als die Signalisierungssignale, herausfiltert. Auf diese Weise findet im Richtkoppler RK mittels des Tiefpasses TP1 eine Entkopplung des hochfrequenzmodulierten Trägers von dem Signalisierungssignal statt. Die Signalisierungssignale des Steuermittels µP schalten den Transistor T1. Das Potential des Innenleiters des Koaxialkabels K wird daher beim Schalten des Transistors T1 auf Masse gezogen. Der Kondensator C am Ende des Innenleiters ist so dimensioniert, daß er für die niederfrequenten Signalisierungssignale eine Unterbrechung bedeutet. Das Potential des Innenleiters liegt daher in dem Fall, daß der Transistor nicht durchschaltet, auf + 5V. Auf dem Innenleiter entstehen somit digitale Signale zur Signalisierung.

Wie in der Fig. 2 zu erkennen ist, empfängt das Steuermittel µP nicht nur die Signalisierungssignale anderer Teilnehmerstationen, sondern auch seine eigenen. Damit erhält es zum einen eine Kontrollmöglichkeit, ob die richtigen Signalisierungssignale ausgesandt wurden, und zum anderen kann es feststellen, ob mehrere Teilnehmer gleichzeitig signalisieren. Dies würde die Signalisierungssignale auf dem Innenleiter des Koaxialkabels K verfälschen und ist somit nicht erlaubt. Wenn das Steuermittel µP daher Signalisierungssignale anderer Teilnehmerstationen wahrnimmt, dann darf es für eine vorgegebene Wartezeit selbst keine Signalisierungssignale aussenden. Die Wartezeit kann für jede der Teilnehmerstationen unterschiedlich lang sein, um zu vermeiden, das nach dem Warten mehrere Teilnehmerstationen gleichzeitig mit dem Signalisieren beginnen.

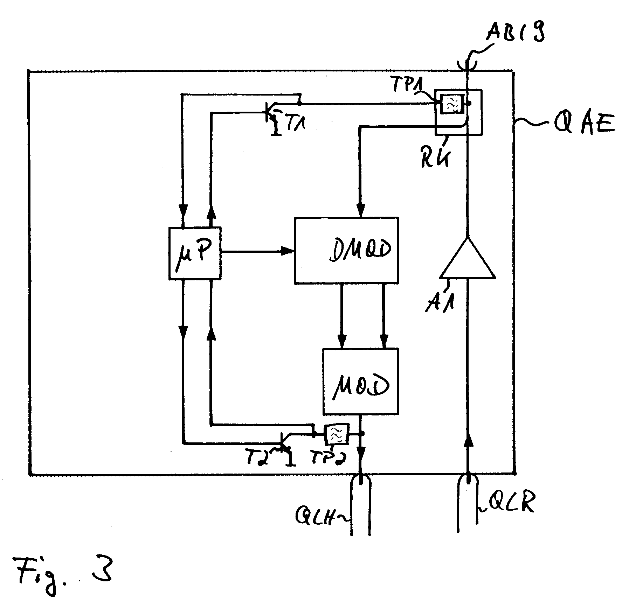

Fig. 3 zeigt das Ausführungsbeispiel der Querverbindungseinheit QAE aus Fig. 1, mit deren Hilfe eine Verbindung zu einem der Teilnehmer des weiteren, gleichartigen Kommunikationssystems SCS aufgebaut werden kann. Die Querverbindungseinheit QAE enthält die gleichen Komponenten µP, T1, TP1, RK, DMOD und MOD wie die Teilnehmeranschlußeinheit TAE1. Diese Komponenten erfüllen die bereits oben beschriebenen Aufgaben. Allerdings ist das Modulationsmittel MOD in der Querverbindungseinheit QAE eingangsseitig mit den Ausgängen des Demodulationsmittels DMOD verbunden, so daß die im Demodulationsmittel DMOD demodulierte Bild- und Tonsignale getrennt den Eingängen des Modulationsmittels MOD zugeführt und dort wiederum auf einen festgelegten Träger moduliert werden. Der Ausgang des Modulationsmittels MOD ist mit dem Koaxialkabel QLH verbunden. Zur Erzeugung von Signalisierungssignalen für den Auf- und Abbau der Verbindung zu dem weiteren, gleichartigen Kommunikationssystem SCS ist ein Ausgang des Steuermittels µP mit der Basis eines weiteren Transistors T2, dessen Emitter ebenfalls auf Masse gelegt ist, verbunden. Der Kollektor von T2 ist über einen weiteren Tiefpaß TP2 mit dem Koaxialkabel QLH und desweiteren mit einem Eingang des Steuermittels µP verbunden. Der Vorgang der Signalisierung verläuft auch hier wie oben beschrieben. Der Eingang eines Verstärkers A1 der Querverbindungseinheit QAE ist an das Koaxialkabel QLR und sein Ausgang an den nichtverzweigenden Eingang des Richtkopplers RK angeschlossen. Die von dem weiteren, gleichartigen Kommunikationssystem SCS kommenden Bild-, Ton- und Signalisierungssignale werden durch den Verstärker A1 verstärkt und auf das Koaxialkabel K eingekoppelt.

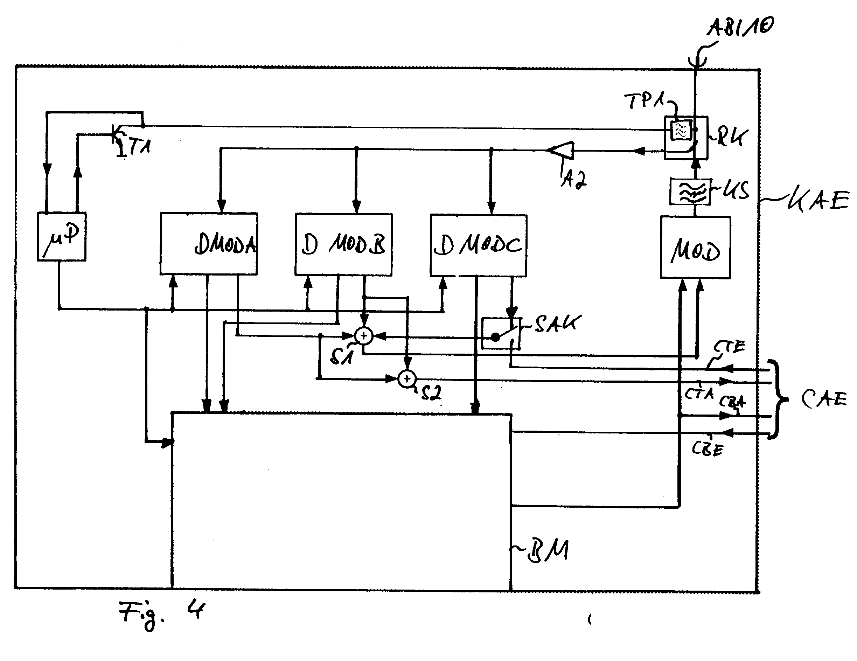

Fig. 4 zeigt das Ausführungbeispiel der Videokonferenzeinheit KAE aus Fig. 1. Im vorliegenden Ausführungsbeispiel können drei Teilnehmer die Videokonferenz abhalten, von denen ein Teilnehmer Teilnehmer des öffentlichen ISDN sein kann. Einer der drei Teilnehmer kann über die Querverbindungseinheit QAE Teilnehmer des weiteren, gleichartigen Kommunikationsnetzes SCS sein. Die Videokonferenzeinheit KAE enthält wie die Teilnehmeranschlußeinheit TAE1 den Richtkoppler RK, den Tiefpaß TP1, den Transistor T1, das Steuermittel µP, das Modulationsmittel MOD und die Kanalsperre KS. Diese Komponenten sind bis auf die im folgenden beschriebenen Änderungen ebenso verschaltet wie in der Teilnehmeranschlußleitung TAE1 und erfüllen auch die gleichen Aufgaben. Weiterhin hat die Videokonferenzeinheit KAE statt dem einen Demodulationsmittel DMOD eine Anzahl von drei Demodulationsmitteln DMODA, DMODB, DMODC. Eines für jeden der drei Teilnehmer. Die über den Richtkoppler RK eingekoppelten Bild- und Tonsignale werden von einem Verstärker A2 verstärkt und auf die Eingänge der drei Demodulationsmittel DMODA, DMODB, DMODC gegeben. Die Demodulationsmittel DMODA, DMODB, DMODC werden von dem Steuermittel µP auf den zu empfangenden Kanal abgestimmt. Die von den drei Demodulationsmitteln DMODA, DMODB, DMODC demodulierten Bildsignale und ein von der Codec-Anschlußeinheit CAE im Falle, das ein Teilnehmer des öffentlichen ISDN an der Videokonferenz beteiligt ist, kommendes Bildsignal CBE werden jeweils zu einem Bildmischmodul BM geleitet. Dort werden sie per Bild-in-Bild Technik gemischt, d.h., einer der drei Teilnehmer erscheint als Hauptbild groß auf den Bildschirmen der beteiligten Teilnehmerstationen und die beiden anderen Teilnehmer werden als Kleinbilder in das Hauptbild eingeblendet. Jeder der drei Teilnehmer erhält das gleiche Bild. Welcher der drei Teilnehmer das Hauptbild liefert, kann beliebig gewählt und während der Videokonferenz geändert werden. Dies erfolgt durch eine entsprechende Signalisierung. Der Ausgang des Bildmischmoduls BM ist mit dem Modulationsmittel MOD und der Codecanschlußeinheit CAE verbunden. D.h., ein gemischtes Bildsignal CBA des Bildmischmoduls BM wird sowohl moduliert auf das Koaxialkabel K eingekoppelt als auch zu der Codec-Anschlußeinheit CAE übertragen.

Die von den beiden Demodulationsmitteln DMODA, DMODB demodulierten Tonsignale werden auf einen ersten Summierer S1 und einen zweiten Summierer S2 geführt. Das von dem Demodulationsmittel DMODC demodulierte Tonsignal wird auf einen ersten Eingang eines Schalters SAK gegeben. Ein zweiter Eingang des Schalters SAK ist mit einem Tonsignal CTE des eventuell teilnehmenden Teilnehmers des öffentlichen ISDN belegt. Ein Ausgang des Schalters SAK ist auf den ersten Summierer S1 geführt. Ein von dem ersten Summierer S1 erzeugtes Summentonsignal wird auf das Modulationsmittel MOD gegeben, dort zusammen mit dem Bildsignal CBA moduliert und dann über die Kanalsperre KS und den Richtkoppler RK auf das Koaxialkabel K eingekoppelt. Der Schalter SAK wird von dem Steuermittel µP aufgrund der empfangenen Signalisierung geschaltet, je nachdem ob ein Teilnehmer des öffentlichen ISDN an der Videokonferenz beteiligt ist oder nicht.

Da in den Teilnehmeranschlußeinheiten der jeweiligen an der Videokonferenz beteiligten Teilnehmer als Tonsignal nur das Summentonsignal empfangen wird, muß dort das eigene Tonsignal wieder abgezogen werden. Dies ist in Fig. 2 nicht eingezeichnet. Da dies in dem Fall, daß ein Teilnehmer des öffentlichen ISDN an der Videokonferenz beteiligt ist, nicht möglich ist, wird ein von dem zweiten Summierer S2 erzeugtes Summentonsignal CTA ohne die Überlagerung des dritten von dem Ausgang des Schalters SAK kommenden Tonsignals zur Codec-Anschlußeinheit CAE übertragen.

Die Bild- und Tonsignale CTE, CTA, CBA, CBE von und zu der Codec-Anschlußeinheit CAE werden unmoduliert übertragen. Dies ist problemlos möglich, falls die Videokonferenzeinheit KAE und die Codec-Anschlußeinheit CAE in unmittelbarer Nachbarschaft installiert sind.

Soll für jeden Teilnehmer der Videokonferenz eine individuelle Bildmischung möglich sein, so ist für jeden Teilnehmer der Videokonferenz ein eigenes Bildmischmodul BM, ein eigenes Modulationsmittel und ein eigenes Koppelmittel an dem Koaxialkabel K vorgesehen. Es ist desweiteren ebenfalls möglich, mehr als 3 Teilnehmer an der Videokonferenz zu beteiligen, wenn dafür das Kommunikationssystem CS und insbesondere die Videokonferenzeinheit KAE entsprechend aufgebaut ist.

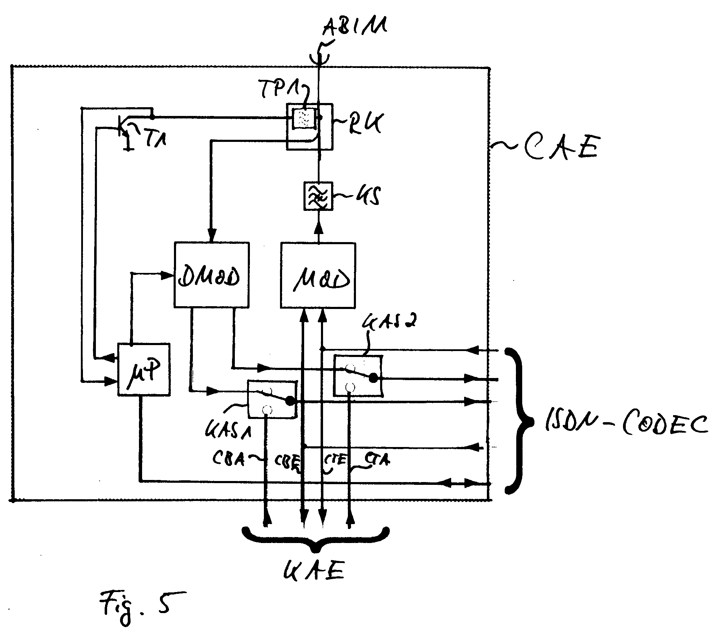

Fig. 5 zeigt das Ausführungsbeispiel der Codec-Anschlußeinheit CAE aus Fig. 1. Die Codec-Anschlußeinheit CAE enthält die gleichen Komponenten µP, T1, TP, RK, DMOD, MOD und KS wie die Teilnehmeranschlußeinheit TAE1. Diese Komponenten erfüllen die bereits oben beschriebenen Aufgaben und sind untereinander so verschaltet wie in der Teilnehmeranschlußeinheit TAE1. Das Steuermittel µP hat eine bidirektionale Verbindung mit dem ISDN-Codec, um mit diesem Steuerbefehle auszutauschen.

Die Bild- und Tonsignale von und zu dem Modulationsmittel MOD und dem Demodulationsmittel DMOD werden an die Schnittstelle des ISDN-Codecs angepaßt. Die vom ISDN-Codec kommenden Tonsignale CTE und Bildsignale CBE werden sowohl auf das Modulationsmittel MOD als auch zur Videokonferenzeinheit KAE geleitet. Die vom Demodulationsmittel DMOD kommenden, demodulierten Bildsignale werden auf einen ersten Eingang eines ersten Schalters KAS1 und die von der Videokonferenzeinheit KAE kommenden Bildsignale CBA auf einen zweiten Eingang des ersten Schalters KAS1 gegeben. Ein Ausgang des ersten Schalters KAS1 ist mit dem ISDN-Codec verbunden. Die vom Demodulationsmittel DMOD kommenden, demodulierten Tonsignale werden auf einen ersten Eingang eines zweiten Schalters KAS2 und die von der Videokonferenzeinheit KAE kommenden Tonsignale CTA auf einen zweiten Eingang des zweiten Schalters KAS2 gegeben. Ein Ausgang des zweiten Schalters KAS2 ist mit dem ISDN-Codec verbunden. Im Falle der Videokonferenz, an der ein Teilnehmer des öffentlichen ISDN beteiligt ist, werden der erste Schalter KAS1 und der zweite Schalter KAS2 von dem Steuermittel µP so geschaltet, daß die von der Videokonferenzeinheit KAE kommenden Bild- und Tonsignale CBA und CTA zum ISDN-Codec geleitet werden. Ansonsten sind der erste Schalter KAS1 und der zweite Schalter KAS2 so geschaltet, daß die von dem Demodulationsmittel DMOD kommenden Bild- und Tonsignale zum ISDN-Codec geleitet werden.

Um die Abhörsicherheit des Kommunikationssystems CS zu erhöhen, ist es möglich, die von den Teilnehmerstationen TAE1, ..., TAE8, der Querverbindungseinheit QAE, der Videokonferenzeinheit KAE und der Codec-Anschlußeinheit CAE gesendeten Bildsignale vor der Einkopplung auf das Koaxialkabel K negativ zu modulieren und entsprechend negativ zu demodulieren. Negativ modulieren oder negativ demodulieren heißt, daß die zu sendenden oder die empfangenen Bild- und Tonsignale zunächst invertiert und dann moduliert oder demoduliert werden. Desweiteren kann der nach der CCIR-Fernsehnorm standardisierte Bild-Ton-Signalabstand von 5,5 MHz verändert werden, was allerdings auch dazu führt, daß die vorgeschlagenen, handelsüblichen Modulationsmittel MOD und Demodulationsmittel DMOD nicht verwendet werden können. Weiterhin kann der dem jeweiligen Modulationsmittel MOD zugewiesene Kanal ein anderer sein, als ein nach der CCIR-Fernsehnorm standardisierter Kanal.

In den beschriebenen Ausführungsbeispielen ist den Modulationsmitteln MOD eine feste Trägerfrequenz und damit ein fester Kanal zur Übertragung der Bild- und Tonsignale über das Koaxialkabel K zugeordnet. Es ist auch möglich, die Erfindung mit einer Kanalvermittlungseinrichtung, wie sie z.B. im erwähnten Stand der Technik beschrieben ist, anzuwenden.

## Patentansprüche

1. Kommunikationssystem (CS) für eine Übertragung von Bild- und Tonsignalen mit einem Breitbandkabel (K), an das eine Vielzahl von Anschlußeinheiten (TAE1, ..., TAE8, QAE, KAE, CAE) angeschlossen ist, die jeweils ein Modulationsmittel (MOD) zur Modulation eines zu sendenden Bild- und Tonsignals auf einen Hochfrequenz-Träger, ein Demodulationsmittel (DMOD) zur Demodulation eines empfangenen, modulierten Bild- und Tonsignals und ein Signalisierungsmittel zum Empfang und zur Erzeugung eines Signalisierungssignals zum Auf- oder Abbau einer Verbindung zwischen wenigstens zwei der Anschlußeinheiten (TAE1, ..., TAE8, QAE, KAE, CAE) haben,
**dadurch gekennzeichnet**, daß die Anschlußeinheiten (TAE1, ..., TAE8, QAE, KAE, CAE) jeweils mittels eines richtungsunabhängigen Koppelmittels (AD1, ..., AD11) an das Breitbandkabel (K) angeschlossen sind.

2. Kommunikationssystem nach Anspruch 1,
dadurch gekennzeichnet, daß ein Signalisierungssignal zum Auf- oder Abbau der Verbindung zwischen wenigstens zwei der Anschlußeinheiten (TAE1, ..., TAE8, QAE, KAE, CAE) über das Breitbandkabel (K) übertragen wird.

3. Kommunikationssystem nach Anspruch 1 oder 2,
dadurch gekennzeichnet, daß dem Modulationsmittel (MOD) der jeweiligen Anschlußeinheit (TAE1, ..., TAE8, QAE, KAE, CAE) ein vorgegebener Kanal zuweisbar ist, und das Demodulationsmittel (DMOD) der jeweiligen Anschlußeinheit (TAE1, ..., TAE8, QAE, KAE, CAE) mittels eines Steuermittels (µP) aufgrund des empfangenen Signalisierungssignals variabel auf einen anderen Kanal abstimmbar ist.

4. Kommunikationssystem nach einem der Ansprüche 1-3,
dadurch gekennzeichnet, daß das von einer der Anschlußeinheiten (TAE1, ..., TAE8, QAE, KAE, CAE) zu sendende Bildsignal in der Anschlußeinheit (TAE1, ..., TAE8, QAE, KAE, CAE) negativ moduliert werden kann und das zu empfangende Bildsignal, falls es negativ moduliert ist, in der Anschlußeinheit (TAE1, ..., TAE8, QAE, KAE, CAE) negativ demoduliert werden kann.

5. Kommunikationssystem nach einem der Ansprüche 1-4,
dadurch gekennzeichnet, daß ein von dem Modulationsmittel (MOD) einer der Anschlußeinheiten (TAE1, ..., TAE8, QAE, KAE, CAE) erzeugter Bild-Ton-Signalabstand ein anderer ist als 5,5 MHz und/oder der dem Modulationsmittel (MOD) einer der Anschlußeinheiten (TAE1, ..., TAE8, QAE, KAE, CAE) zugewiesene Kanal ein anderer ist als ein nach der CCIR-Fernsehnorm standardisierter Kanal.

6. Kommunikationssystem nach einem der Ansprüche 1-5,
dadurch gekennzeichnet, daß das Breitbandkabel (K) ein Koaxialkabel ist.

7. Anschlußeinheit (TAE1, ..., TAE8, QAE, KAE, CAE) für ein Kommunikationssystem (CS) nach Anspruch 1,
dadurch gekennzeichnet, daß sie einen Anschluß (ABI1, ..., ABI11) für ein weiteres Breitbandkabel (ZU1, ..., ZU11) hat, über den sowohl die zu sendenden Bild- und Tonsignale als auch die zu empfangenden Bild- und Tonsignale übertragbar sind.

8. Anschlußeinheit nach Anspruch 7,
dadurch gekennzeichnet, daß über den Anschluß (ABI1, ..., ABI11) ein Signalisierungssignal zum Auf- oder Abbau der Verbindung zwischen der Anschlußeinheit und einer weiteren an das Breitbandkabel (K) angeschlossenen Anschlußeinheit (TAE1, ..., TAE8, QAE, KAE, CAE) übertragbar ist.

9. Anschlußeinheit nach Anspruch 8,
dadurch gekennzeichnet, daß das Breitbandkabel (K) über einen ersten Widerstand (Rₛ) gegen ein positives Potential und über einen zweiten Widerstand (R) und einen zu dem zweiten Widerstand (R) in Reihe geschalteten Kondensator (C) gegen Masse geschaltet ist, und daß die Anschlußeinheit (TAE1, ..., TAE8, QAE, KAE, CAE) ein Schaltmittel (T1) hat, das mit einem Steuermittel (µP) und dem Anschluß (ABI1, ..., ABI11) verbunden ist.

10. Anschlußeinheit nach Anspruch 9,
dadurch gekennzeichnet, daß das Schaltmittel (T1) ein Transistor ist, dessen Basis mit dem Steuermittel (µP) und dessen Kollektor mit dem Anschluß (ABI1, ..., ABI11) verbunden ist und dessen Emitter auf Masse gelegt ist.

11. Anschlußeinheit nach einem der Ansprüche 7 bis 10,
dadurch gekennzeichnet, daß sie eine Teilnehmeranschlußeinheit (TAE1, ..., TAE8) zum Anschluß einer Teilnehmerstation (TS1, ..., TS8) an das Breitbandkabel (K) oder eine Videokonferenzeinheit (KAE) oder eine Querverbindungseinheit (QAE) zum Verbinden des Kommunikationssystems (CS) mit einem weiteren, gleichartigen Kommunikationssystem (SCS) oder eine Codec-Anschlußeinheit (CAE) zum Verbinden des Kommunikationssystems (CS) mit einem öffentlichen Netz (ISDN) sein kann.
